# EUROPÄISCHE PATENTSCHRIFT

(11) **EP 4 432 034 B1**
(45) Veröffentlichungstag und Bekanntmachung des Hinweises auf die Patenterteilung: **10.12.2025**
(21) Anmeldenummer: 24158932.4
(22) Anmeldetag: 21.02.2024
(51) Int. Cl.: G05B 23/02

(54) **VERFAHREN UND SYSTEM ZUR ERKENNUNG EINER KONFIGURATION EINER MODULAREN SICHERHEITSSTEUERUNG**
METHOD AND SYSTEM FOR DETECTING A CONFIGURATION OF A MODULAR SAFETY CONTROLLER
PROCÉDÉ ET SYSTÈME DE DÉTECTION D'UNE CONFIGURATION D'UN CONTRÔLEUR DE SÉCURITÉ MODULAIRE

(30) Priorität: 15.03.2023 DE 102023106495
(43) Veröffentlichungstag der Anmeldung: 18.09.2024
(73) Patentinhaber: Pilz GmbH & Co. KG, 73760 Ostfildern (DE)
(72) Erfinder: Rotzinger, Florian, 73760 Ostfildern (DE)
(74) Vertreter: Manske, Jörg

(56) Entgegenhaltungen:
- EP-B1- 3 229 175
- DE-A1- 102019 105 688
- US-A1- 2014 183 254

## Beschreibung

Die vorliegende Erfindung betrifft ein Verfahren und ein System zur Erkennung einer Konfiguration einer modularen Sicherheitssteuerung, die einen Modulblock mit einem zentralen, parametrisierbaren Steuerungsmodul und mit einer Anzahl n ≥ 1 parametrisierbarer Elektronikmodule aufweist, wobei die Konfiguration der modularen Sicherheitssteuerung durch unterschiedliche Elektronikmodultypen und unterschiedliche Positionen der Elektronikmodule innerhalb des Modulblocks festlegbar ist und wobei die Funktionen der modularen Sicherheitssteuerung durch die Einstellung von Regelelementen und/oder Schaltelementen zumindest einiger der Module parametrisierbar sind.

Aus dem Stand der Technik sind modulare Sicherheitssteuerungen, die den Normen EN IEC 61508, EN IEC 62061 und ISO 13849 entsprechen, in unterschiedlichen Ausführungsformen bekannt. Diese modularen Sicherheitssteuerungen dienen insbesondere dem Zweck, technische Anlagen oder Maschinen beim Auftreten einer Gefahrensituation fehlerfrei und sicher in einen für Menschen ungefährlichen Zustand zu überführen. Zu diesem Zweck werden eingangsseitig mittels einer Anzahl von Sicherheitseingängen entsprechende Eingangssignale von Signalgebern beziehungsweise Meldegeräten, bei denen es sich zum Beispiel um Not-Aus-Schalter, Not-Halt-Schalter, Lichtgitter, Lichtvorhänge, Trittmatten, Schutztürpositionsschalter, 3D-Laserscanner etc. handeln kann, empfangen und mittels einer Steuereinheit sicher ausgewertet. Ausgangsseitig werden entsprechende Sicherheitsausgänge eines Ausgangskreises angesteuert. Über diese Sicherheitsausgänge werden beim Auftreten einer Gefahrensituation Aktoren, wie zum Beispiel Schütze, Ventile etc., mit Ausgangssignalen derart angesteuert, dass die an diese Aktoren angeschlossene Maschine/angeschlossenen Maschinen oder technische Anlage in einen für Menschen ungefährlichen Zustand überführt werden kann.

Ein wichtiges Element einer modularen Sicherheitssteuerung ist ein zentrales Steuerungsmodul, welches die Steuereinheit und ein nicht-flüchtiges Speichermittel umfasst, in dem insbesondere die Software für den Betrieb der modularen Sicherheitssteuerung abrufbar gespeichert ist, die während des Betriebs von der Steuereinheit ausgeführt wird.

Modulare Sicherheitssteuerungen umfassen ferner mehrere Elektronikmodule, die zusammen mit dem zentralen Steuerungsmodul in zumindest einer Modulreihe angeordnet sind und bestimmte Funktionen, insbesondere sicherheitsgerichtete Funktionen, zur Verfügung stellen. Das zentrale Steuerungsmodul und die Elektronikmodule werden bei der Montage in geeigneter Weise elektrisch und mechanisch miteinander verbunden und bilden einen Modulblock, wobei das zentrale Steuerungsmodul dabei den Kopf der Modulreihe bildet und daher häufig auch als Kopfmodul bezeichnet wird.

Der modulare Aufbau einer Sicherheitssteuerung schafft in vorteilhafter Weise die Möglichkeit einer anwendungsspezifischen Konfiguration, indem mehrere Elektronikmodule individuell zusammengestellt, miteinander verdrahtet und so konfiguriert und parametrisiert werden, dass sie die gewünschten Funktionen, insbesondere auch Sicherheitsfunktionen, zur Verfügung stellen können. Beispiele für Elektronikmodule, aus denen modulare Sicherheitssteuerungen mit ganz unterschiedlichen Sicherheitsfunktionen aufgebaut werden können, sind unter anderem Eingangsmodule, die Eingangssignale eines oder mehrerer Signalgeber, wie zum Beispiel Eingangssignale von Sensoren oder Notbefehlsgeräten, empfangen und gegebenenfalls verarbeiten können, Ausgangsmodule, die Ausgangssignale an einen oder mehrere daran angeschlossene Aktoren ausgeben können, kombinierte Eingangs- und Ausgangsmodule (so genannte I/O-Module), Steuerungsmodule, welche die Zuordnung von Eingangs- zu Ausgangsmodulen steuern können, sowie Schnittstellenmodule, Kommunikationsmodule, Feldbuscontroller, Feldbuskoppler, etc.. Bei der Herstellung der modularen Sicherheitssteuerung werden die Elektronikmodule in der zumindest einen Modulreihe aneinandergereiht und entsprechend verdrahtet und so konfiguriert und parametrisiert, dass sie die für den konkreten Anwendungszweck, insbesondere unter Sicherheitsaspekten, erforderlichen Funktionen zur Verfügung stellen können.

Die anwendungsspezifische Konfiguration einer modularen Sicherheitssteuerung kann zum Beispiel mittels eines softwarebasierten Konfigurationswerkzeugs erstellt werden. Eine grafische Benutzerschnittstelle des Konfigurationswerkzeugs ermöglicht eine einfache und intuitive Bedienung des Konfigurationswerkzeugs. Der Benutzer kann interaktive Benutzereingaben vornehmen und zum Beispiel entsprechende Logikanforderungen, die an die modulare Sicherheitssteuerung gestellt werden, festlegen. Bei dem Konfigurationsprozess können zum Beispiel auch bestimmte, in der zu steuernden Anlage beziehungsweise im Bereich der Maschine vorhandene Signalgeber beziehungsweise Meldegeräte, wie zum Beispiel Not-Aus- oder Not-Halt-Taster, Schutztüren, Lichtgitter usw., oder Sensoren, deren Eingangssignale sicher ausgewertet werden müssen, sowie Aktoren, die sicher angesteuert werden müssen, von dem Benutzer ausgewählt werden. Somit können also insbesondere die Sicherheitseingänge und Sicherheitsausgänge der modularen Sicherheitssteuerung mithilfe des Konfigurationswerkzeugs konfiguriert werden.

Die Eigenschaften des zentralen Steuerungsmoduls sowie der Elektronikmodule können durch Hardwareeinstellungen mechanisch betätigbarer Regelelemente festgelegt werden, so dass die Funktionen des zentralen Steuerungsmoduls sowie der Elektronikmodule entsprechend parametrisiert werden können. Bei diesen Regelelementen kann es sich vorzugsweise um Drehgeber, die insbesondere als Potentiometer ausgebildet sein können, handeln. Die Hardwareeinstellungen umfassen zum Beispiel das Setzen von Drehstellungen eines oder mehrerer Drehgeber, insbesondere Potentiometer, des zentralen Steuerungsmoduls sowie der Elektronikmodule. Durch die Drehstellungen der Drehgeber der Elektronikmodule können insbesondere Einschalt- und/oder Ausschaltverzögerungen der an die betreffenden Elektronikmodule angeschlossenen Aktoren eingestellt werden. Ferner können die Hardwareeinstellungen auch das Setzen von Schaltstellungen eines oder mehrerer Schaltelemente des zentralen Steuerungsmoduls und/oder der Elektronikmodule umfassen, wobei die Schaltelemente nicht als Drehgeber ausgebildet sind. Nicht als abschließend zu verstehende Beispiele für derartige Schaltelemente, die für die Parametrisierung des zentralen Steuerungsmoduls sowie der Elektronikmodule eingesetzt werden können, sind DIP-Schalter.

Der Nutzer kann die Schaltstellungen der mechanisch betätigbaren Regelelemente und Schaltelemente, insbesondere die Drehstellungen der Drehgeber und die Stellungen der DIP-Schalter, bei der Konfiguration vorgeben, so dass diese Schaltstellungen bei der Herstellung der modularen Sicherheitssteuerung bereits herstellerseitig vorgenommen werden können. Dadurch entfällt ein zusätzlicher Einstellungsaufwand bei der Inbetriebnahme der modularen Sicherheitssteuerung.

Die individuelle Konfiguration und Parametrisierung der modularen Sicherheitssteuerung auf die konkrete Sicherheitsanwendung erfolgt anhand der gewählten Modultypen, deren Abfolge in der zumindest einen Modulreihe des Modulblocks und der jeweiligen Parametereinstellungen. Für die so erhaltene Konfiguration der modularen Sicherheitssteuerung kann ein eineindeutiger maschinenlesbarer Konfigurationscode erzeugt werden, der als Datensatz in einem nicht-flüchtigen Speichermittel abrufbar gespeichert werden kann. Dieser eineindeutige Konfigurationscode kann in einer elektronischen Dokumentation der modularen Sicherheitssteuerung oder im Falle eines Defekts auch als Bestell-Code für eine Ersatzbeschaffung verwendet werden.

Ein Vorteil modularer Sicherheitssteuerungen besteht darin, dass die Konfiguration beispielsweise durch den Austausch eines oder mehrerer Elektronikmodule und/oder durch das Hinzufügen eines oder mehrerer Elektronikmodule sehr einfach verändert werden kann. Somit ist es essentiell, dass jede tatsächliche Änderung der Konfiguration und der gegebenenfalls auch geänderten Parametrisierung der modularen Sicherheitssteuerung während des gesamten Lebenszyklus auch in der digitalen Dokumentation der modularen Sicherheitssteuerung nachgehalten wird.

Um derartige Änderungen fehlerfrei in die digitale Dokumentation zu übertragen, ist es wünschenswert, die Prüfung der Änderungen in einen möglichst automatisierten Arbeitsablauf einzubetten. Eine wesentliche Fehlerquelle ist hierbei die exakte Bestimmung der veränderten Konfiguration und Parametrisierung der modularen Sicherheitssteuerung. Hieraus leitet sich die Problemstellung ab, wie die jeweils aktuelle Konfiguration beziehungsweise auch sämtliche Konfigurationsänderungen und Parametrisierungänderungen der modularen Sicherheitssteuerung durch einen Nutzer möglichst effizient und fehlerfrei bestimmt und dokumentiert werden können.

Die DE 10 2019 105 688 A1 offenbart ein Verfahren zum Überprüfen der Hardwarekonfiguration eines real aufgebauten Steuerungssystems mithilfe einer mobilen Einrichtung, die eine Kamera und eine Speichereinrichtung enthält, in welcher eine digitale Repräsentation einer gewünschten Hardwarekonfiguration des real aufgebauten Steuerungssystems gespeichert ist, wobei das real aufgebaute Steuerungssystem ein Steuerungsmodul mit mehreren Anschlusseinrichtungen aufweist, wobei an jeder Anschlusseinrichtung ein E/A-Modul derart angeschlossen ist, dass das Steuerungsmodul mit den E/A-Modulen mechanisch lösbar gekoppelt ist, wobei an dem Steuerungsmodul eine optische Markierung zur eindeutigen Identifizierung des Steuerungsmoduls und an jedem der E/A-Module wenigstens eine optische Markierung zur eindeutigen Identifizierung des jeweiligen E/A-Moduls angebracht ist, mit folgenden Schritten:
a) Aufnehmen, mit der Kamera der mobilen Einrichtung, eines digitalen Bildes des real aufgebauten Steuerungssystems; und
b) Überprüfen der Hardwarekonfiguration des real aufgebauten Steuerungssystems in der mobilen Einrichtung, indem die in der mobilen Einrichtung gespeicherte digitale Repräsentation mit dem in Schritt a) aufgenommenen digitalen Bild unter Berücksichtigung der optischen Markierungen verglichen wird.

Um die Qualität und Zuverlässigkeit der in Schritt b) ausgeführten Überprüfung zu erhöhen, sind die optischen Markierungen an vorbestimmten Stellen des Steuerungsmoduls und der E/A-Module angebracht, wobei Schritt a) folgende weitere Schritte umfasst: Extrahieren der im aufgenommenen digitalen Bild enthaltenen optischen Markierungen und Anordnen der extrahierten optischen Markierungen jeweils in einem Feld einer ersten 2-dimensionalen Matrix, wobei die in der mobilen Einrichtung gespeicherte digitale Repräsentation der gewünschten Hardwarekonfiguration des Steuerungssystems eine zweite 2-dimensionale Matrix enthält, wobei in vorbestimmten Feldern der zweiten Matrix jeweils eine eindeutige Kennung zur Identifizierung des Steuerungsmoduls und der E/A-Module enthalten ist, und wobei in Schritt b) die Inhalte der korrespondierenden Felder der ersten und zweiten Matrix miteinander verglichen werden.

Die EP 3 229 175 B1 offenbart eine mobile Vorrichtung zum Erzeugen von Eingabedaten für eine Gebäudeautomatisierungskonfiguration, welche Bilddaten eines Gebäudes aufzeichnet und verarbeitet.

Zur Lösung des oben genannten Problems schlägt die Erfindung ein Verfahren zur Erkennung einer Konfiguration einer modularen Sicherheitssteuerung mit den Merkmalen des Anspruchs 1 und ein System mit den Merkmalen des Anspruchs 12 vor. Die Unteransprüche betreffen vorteilhafte Weiterbildungen der Erfindung.

Ein erfindungsgemäßes Verfahren zur Erkennung einer Konfiguration einer modularen Sicherheitssteuerung, die einen Modulblock mit einem zentralen, parametrisierbaren Steuerungsmodul und mit einer Anzahl n ≥ 1 parametrisierbarer Elektronikmodule aufweist, die aus einer Mehrzahl zur Verfügung stehender Modultypen ausgewählt sind, wobei die Konfiguration der modularen Sicherheitssteuerung durch unterschiedliche Elektronikmodultypen und unterschiedliche Positionen der Elektronikmodule innerhalb des Modulblocks festlegbar ist und wobei die Funktionen der modularen Sicherheitssteuerung durch die Einstellung von Regelelementen und/oder Schaltelementen zumindest einiger der Elektronikmodule und des zentralen Steuerungsmoduls parametrisierbar sind, umfasst die Schritte:
- Bereitstellen einer Vielzahl eineindeutiger Konfigurationscodes, die unterschiedliche Konfigurationen und Parametrisierungen einer Vielzahl unterschiedlicher modularer Sicherheitssteuerungen repräsentieren,
- Erzeugen eines digitalen Abbildes des Modulblocks der modularen Sicherheitssteuerung mittels einer kamerabasierten Abbilderzeugungseinrichtung auf Basis eines oder mehrerer Bilder oder Bildsequenzen des Modulblocks, die von einer Kameraeinrichtung der Abbilderzeugungseinrichtung generiert werden,
- Übertragen des digitalen Abbildes zu einer Auswerteeinrichtung, wobei mittels der Auswerteeinrichtung ein Auswertealgorithmus ausgeführt wird, welcher durch Bilderkennung die ausgewählten Modultypen, die Positionen des zentralen Steuerungsmoduls und der Elektronikmodule innerhalb des Modulblocks und die Einstellungen der Regelelemente und/oder Schaltelemente jedes der Elektronikmodule und des zentralen Steuerungsmoduls erfasst und verarbeitet und aus den daraus erhaltenen Informationen einen eineindeutigen Logikcode erzeugt, welcher die aktuelle Konfiguration und Parametrisierung des Modulblocks der modularen Sicherheitssteuerung repräsentiert,
- Vergleichen des im vorhergehenden Schritt erzeugten eineindeutigen Logikcodes mit den bereitgestellten eineindeutigen Konfigurationscodes zur Identifikation der aktuellen Konfiguration und Parametrisierung des Modulblocks der modularen Sicherheitssteuerung, wobei ein Identifikationsdatensatz erzeugt wird, wenn der Logikcode mit einem der Konfigurationscodes übereinstimmt, und wobei ein Fehlercode erzeugt wird, wenn der Logikcode mit keinem der Konfigurationscodes übereinstimmt, und
- Ausgeben des Identifikationsdatensatzes und/oder eines aus dem Identifikationsdatensatz erhältlichen Bildes, wenn der Logikcode mit einem der Konfigurationscodes übereinstimmt, oder Ausgeben des Fehlercodes, wenn der Logikcode mit keinem der Konfigurationscodes übereinstimmt,
wobei während des Schritts des Erzeugens des digitalen Abbildes eine Mehrzahl spezifischer Erkennungsmerkmale der Module innerhalb des Modulblocks und alle Parametrisierungen der Module erfasst werden.

Das erfindungsmäße Verfahren ermöglicht in vorteilhafter Weise die automatisierte Erkennung der unterschiedlichen Modultypen, der Anzahl und der Reihenfolge aller verbauten Einzelmodule innerhalb des Modulblocks der modularen Sicherheitssteuerung sowie deren Parametrisierung im verbauten Zustand. Dabei beschreiben die Auswahl und Anordnung der Elektronikmodule das grundlegende Funktionsprinzip (Schaltungsaufbau) und die Parametrisierung der Elektronikmodule und gegebenenfalls auch des zentralen Steuerungsmoduls die Funktionsweise.

Gemäß Anspruch 1 ist vorgesehen, dass während des Schritts des Erzeugens des digitalen Abbildes eine Mehrzahl spezifischer Erkennungsmerkmale der Module innerhalb des Modulblocks und alle Parametrisierungen der Module erfasst werden. Diese spezifischen Erkennungsmerkmale umfassen insbesondere die geometrische Struktur der modularen Sicherheitssteuerung, die durch die Modulreihe innerhalb des Modulblocks gegeben ist, sowie zusätzliche visuell erfassbare, beschreibende Darstellungen, wie zum Beispiel Farbgebungen, Codierungen, Muster, optische Signalcodes, wie zum Beispiel blinkende/blitzende LEDs, die bestimmte Taktungen beziehungsweise Blinkmuster und/oder Farbumschläge aufweisen können, sowie die Stellungen der Regelelemente (Drehgeber-Stellungen, insbesondere Potentiometer-Stellungen) und die Stellungen der Schaltelemente und weiteren, gegebenenfalls vorgesehenen Tastern oder dergleichen. Um sicherzustellen, dass von einem Modulblock alle spezifischen Erkennungsmerkmale erfasst werden, muss dieser als Ganzes erfasst werden, so dass alle Systemgrenzen auf dem endgültigen digitalen Abbild erkennbar sind. Wenn einzelne spezifische Erkennungsmerkmale nicht eineindeutig erkannt werden können, ist es zum Beispiel möglich, mittels der Kameraeinrichtung zusätzliche Detailbilder mit Einzelheiten des Modulblocks zu generieren, die in die Erstellung des digitalen Abbildes einfließen können.

Die mithilfe des erfindungsgemäßen Verfahrens durchgeführte Konfigurationserkennung bietet zahlreiche Vorteile für die Nutzer. Zu nennen ist hier insbesondere die Aktualität der Konfigurations- und Parametrisierungsinformationen. Das digitale Abbild und damit auch die Dokumentation der modularen Sicherheitssteuerung sind stets aktuell. Die Konfigurationserkennung und die Übermittlung der Konfigurationsinformationen erfolgen in vorteilhafter Weise in einem automatisierten Prozess, um dadurch etwaige Fehler in der digitalen Dokumentation der modularen Sicherheitssteuerung auszuschließen. Daraus resultieren auch entsprechende Vorteile im Hinblick auf die Effizienz und Benutzerfreundlichkeit.

Eine stets aktuelle, standardisierte, nachvollziehbare und fehlerunanfällige Dokumentation der Konfigurations- und Parametrisierungsänderungen der modularen Sicherheitssteuerung kann sich insbesondere an etwaigen Compliance-Anforderungen und/oder Anforderungen an das Qualitätsmanagement, insbesondere im Hinblick auf Fehlersicherheit und/oder Arbeitssicherheit orientieren beziehungsweise diese erfüllen.

Mittels des hier vorgestellten Verfahrens kann auch sichergestellt werden, dass nur ein einzelner Modulblock erfasst wird. Der Anfang eines jeden Modulblocks ist nämlich durch das eindeutig identifizierbare zentrale Steuerungsmodul (Kopfmodul) definiert. Das Ende des jeweiligen Modulblocks ist aufgrund der Tatsache, dass die einzelnen Modulblöcke im verbauten Zustand nicht direkt aneinandergereiht sind, klar erkennbar. Ebenso sind die unteren und oberen Systemgrenzen auf Basis der geometrischen Form der einzelnen Module eineindeutig identifizierbar. Der Beginn eines neuen Modulblocks ist durch ein diesem zugeordnetes zentrales Steuerungsmodul gekennzeichnet.

**In** einer Ausführungsform wird vorgeschlagen, dass vorzugsweise während des Schritts des Erzeugens des digitalen Abbildes eine Analyseachse erfasst wird, anhand derer festlegbar ist, ob die einzelnen Module des Modulblocks in horizontaler Richtung nebeneinander oder in vertikaler Richtung übereinander angeordnet sind. Vorzugsweise kann die Erfassung der Analyseachse durch die Bestimmung der Einbaulage des zentralen Steuerungsmoduls innerhalb des Modulblocks erfolgen. Aus der Analyseachse kann eine Richtungsachse definiert werden, welche die Richtung des sequentiellen Modulaufbaus der modularen Sicherheitssteuerung festlegt.

In einer Ausführungsform besteht die Möglichkeit, dass vorzugsweise während des Schritts des Erzeugens des digitalen Abbildes die Anzahl der Module innerhalb des Modulblocks bestimmt wird. Vorzugsweise können zur Bestimmung der Anzahl der Module des Modulblocks definierte Abstände zwischen den einzelnen Modulen des Modulblocks erfasst werden.

In einer Ausführungsform kann vorgesehen sein, dass die Erfassung der spezifischen Erkennungsmerkmale und Parametrisierungen der Module innerhalb des Modulblocks in einem einzigen Schritt für den gesamten Modulblock durchgeführt wird.

In einer alternativen Ausführungsform besteht die Möglichkeit, dass die Erfassung der spezifischen Erkennungsmerkmale und Parametrisierungen der Module innerhalb des Modulblocks modulweise in mehreren Schritten und somit kaskadiert durchgeführt wird.

In einer Ausführungsform ist vorgesehen, dass die Bilderkennung mittels eines Bildvergleichs des digitalen Abbildes mit einer Vielzahl von Bildern, die insbesondere in einer Datenbank abrufbar gespeichert sind, durchgeführt wird.

Vorzugsweise kann die Bilderkennung mittels eines modulweisen Bildvergleichs des digitalen Abbildes mit der Vielzahl von Bildern durchgeführt werden. Da ein Bildvergleich aufgrund einer Vielzahl von Konfigurationsmöglichkeiten und Parametrisierungsmöglichkeiten der einzelnen Module sehr aufwendig ist, wird somit in vorteilhafter Weise ein Auswerteverfahren verwendet, welches eine Kaskadierung und somit einen modulweisen Bildvergleich zulässt. Vorzugsweise kann hierbei auch ein Verfahren zur Reduzierung der Variantenvielfalt durchgeführt werden, bei dem zum Beispiel ein Festlegen auf ein oder mehrere dominante Erkennungsmerkmale erfolgt. Generell besteht die Möglichkeit, ein oder mehrere Detailabbildungen von bestimmten charakteristischen Bereichen der modularen Sicherheitssteuerung zur Validierung zu verwenden.

In einer alternativen Ausführungsform besteht die Möglichkeit, dass die Bilderkennung durch eine Simulation und/oder durch Berechnungen auf Basis von Bildsegmenten des digitalen Abbildes erfolgt.

In einer vorteilhaften Ausführungsform kann vorgesehen sein, dass der Identifikationsdatensatz und/oder das aus dem Identifikationsdatensatz erhältliche Bild, wenn der Logikcode mit einem der Konfigurationscodes übereinstimmt, oder der Fehlercode, wenn der Logikcode mit keinem der Konfigurationscodes übereinstimmt, mittels einer Anzeigevorrichtung visualisiert wird.

Auf Basis des digitalen Abbildes der modularen Sicherheitssteuerung wird mit dem hier vorgestellten Verfahren die Konfiguration und Parametrisierung des gesamten Modulblocks der modularen Sicherheitssteuerung identifiziert. Vorzugsweise werden sowohl die aktuelle Konfiguration und Parametrisierung des Modulblocks als auch die möglichen Abweichungen der aktuellen Konfiguration und Parametrisierung des Modulblocks von den ursprünglichen Werkseinstellungen sowie der gesamte Änderungsverlauf ausgegeben und mittels der Anzeigevorrichtung visualisiert. Vorzugsweise ist es möglich, auch Hinweise auf mögliche Fehlkonfigurationen und/oder Konfigurationsänderungen (entweder bereits getätigte oder noch zu tätigende Konfigurationsänderungen) auszugeben und mittels der Anzeigevorrichtung zu visualisieren.

Ein erfindungsgemäßes System zur Erkennung einer Konfiguration einer modularen Sicherheitssteuerung umfasst eine Auswerteeinrichtung, eine kamerabasierte Abbilderzeugungseinrichtung sowie eine Anzeigevorrichtung, wobei das System dazu ausgebildet ist, ein Verfahren nach einem der Ansprüche 1 bis 11 auszuführen.

Die kamerabasierte Abbilderzeugungseinrichtung ist dazu ausgebildet, ein digitales Abbild des Modulblocks der modularen Sicherheitsschaltung zu erzeugen, und umfasst eine Kameraeinrichtung, die eines oder mehrere Bilder oder Bildsequenzen, insbesondere Videosequenzen, des Modulblocks generieren kann. Die Abbilderzeugungseinrichtung kann zum Beispiel ein Mobiltelefon oder ein Tablet-PC oder eine Smart-Kamera für die industrielle Bildverarbeitung oder eine VR-Brille sein.

Die Anzeigevorrichtung kann vorzugsweise in die Abbilderzeugungseinrichtung integriert sein.

Weitere Merkmale und Vorteile eines Ausführungsbeispiels der Erfindung werden unter Bezugnahme auf die Zeichnung nachfolgend beschrieben. Es zeigt:

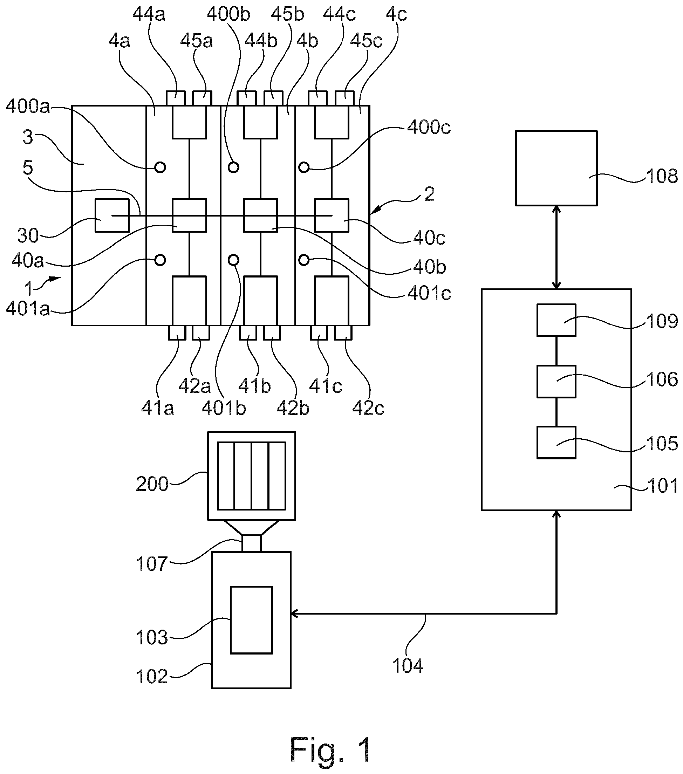

- Fig. 1: eine schematisch stark vereinfachte Darstellung eines Systems zur Durchführung eines Verfahrens zur Erkennung einer Konfiguration einer modularen Sicherheitssteuerung.

Eine modulare Sicherheitssteuerung 1 weist einen Modulblock 2 mit einem zentralen Steuerungsmodul 3 und mit einer Anzahl n ≥ 1 parametrisierbarer Elektronikmodule 4a-4c auf. Um die nachfolgende Beschreibung zu vereinfachen, soll angenommen werden, dass die modulare Sicherheitssteuerung 1 eine Anzahl n = 3 parametrisierbarer Elektronikmodule 4a-4c aufweist. Die modulare Sicherheitssteuerung 1 ist so ausgebildet, dass sie den Normen EN IEC 61508, EN IEC 62061 und ISO 13849 entspricht.

Die Konfiguration der modularen Sicherheitssteuerung 1 ist durch unterschiedliche zur Verfügung stehende Elektronikmodultypen, aus denen die Elektronikmodule 4a-4c anwendungsspezifisch auswählbar sind, und durch unterschiedliche Positionen der Elektronikmodule 4a-4c innerhalb des Modulblocks 2 festlegbar. Die Funktionen der modularen Sicherheitssteuerung 1 können zum Beispiel durch die Einstellung von Regelelementen 400a, 401a, 400b, 401b, 400c, 401c, insbesondere Drehgebern, der Elektronikmodule 4a-4c und durch die Einstellung gegebenenfalls vorgesehener Schaltelemente der Elektronikmodule 4a-4c parametrisiert werden. Es besteht auch die Möglichkeit, dass das zentrale Steuerungsmodul 3 entsprechende Regelelemente 400a, 401a, 400b, 401b, 400c, 401c und/oder Schaltelemente aufweist. Aus Vereinfachungsgründen soll nachfolgend angenommen werden, dass jedes der Elektronikmodule 4a-4c zwei mechanisch betätigbare Regelelemente 400a, 401a, 400b, 401b, 400c, 401c aufweist, die vorzugsweise als Drehgeber, insbesondere als Potentiometer, ausgebildet sind.

Das zentrale Steuerungsmodul 3 umfasst eine prozessorbasierte Steuereinheit 30 und ein hier nicht explizit dargestelltes, nicht-flüchtiges Speichermittel, in dem insbesondere eine Software für den Betrieb der modularen Sicherheitssteuerung 1 abrufbar gespeichert ist, die während des Betriebs von der Steuereinheit 30 ausgeführt wird.

Die Elektronikmodule 4a-4c sind zusammen mit dem zentralen Steuerungsmodul 3 in zumindest einer Modulreihe angeordnet und bilden dadurch den Modulblock 2. Das Steuerungsmodul 3 und die Elektronikmodule 4a-4c werden bei der Montage in geeigneter Weise elektrisch und mechanisch miteinander verbunden, wobei das zentrale Steuerungsmodul 3 den Kopf des Modulblocks 2 bildet und daher häufig auch als Kopfmodul bezeichnet wird.

Der modulare Aufbau der hier gezeigten Sicherheitssteuerung 1 schafft in vorteilhafter Weise die Möglichkeit einer anwendungsspezifischen Konfiguration, indem die Elektronikmodule 4a-4c individuell aus einer Mehrzahl unterschiedlicher zur Verfügung stehender Elektronikmodule 4a-4c zusammengestellt, miteinander verdrahtet und so parametrisiert werden, so dass sie die gewünschten Funktionen, insbesondere auch sicherheitsgerichtete Funktionen, zur Verfügung stellen können.

Beispiele für Elektronikmodule 4a-4c, mittels derer der modularen Sicherheitssteuerung 1 ganz unterschiedliche Funktionen, insbesondere auch sicherheitsgerichtete Funktionen, zur Verfügung gestellt werden können, sind unter anderem Eingangsmodule mit Sicherheitseingängen, die Eingangssignale eines oder mehrerer Signalgeber, wie zum Beispiel Eingangssignale von Sensoren oder Notbefehlsgeräten, empfangen und gegebenenfalls verarbeiten können, Ausgangsmodule mit Sicherheitsausgängen, die Ausgangssignale an einen oder mehrere daran angeschlossene Aktoren ausgeben können, kombinierte Eingangs- und Ausgangsmodule (so genannte I/O-Module) mit Sicherheitseingängen und Sicherheitsausgängen, Steuerungsmodule, welche die Zuordnung von Eingangs- zu Ausgangsmodulen steuern können, sowie Schnittstellenmodule, Kommunikationsmodule, Feldbuscontroller, Feldbuskoppler, etc.. Diese Aufzählung ist nicht als abschließend zu verstehen.

Bei der Herstellung der modularen Sicherheitssteuerung 1 werden das zentrale Steuerungsmodul 3 und die Elektronikmodule 4a-4c in der zumindest einen Modulreihe aneinandergereiht und entsprechend verdrahtet und so parametrisiert, dass sie die für den konkreten Anwendungszweck unter Sicherheitsaspekten erforderlichen Funktionen, insbesondere auch sicherheitsgerichtete Funktionen, zur Verfügung stellen können.

Für eine bidirektionale Kommunikation zwischen dem zentralen Steuerungsmodul 3 und den Elektronikmodulen 4a-4c ist eine Kommunikationsverbindung 5 vorgesehen, die vorzugsweise als serielle BUS-Verbindung realisiert ist. Bei der BUS-Verbindung kann es sich um eine proprietäre Lösung handeln. Vorteilhaft ist es allerdings häufig, eine standardisierte BUS-Verbindung, wie zum Beispiel CAN-BUS, PROFIBUS oder IO-Link zu verwenden. Besonders vorteilhaft ist es zudem, die Kommunikationsverbindung 5 so auszuführen, dass sie fehlersicher ausgebildet ist. Die Elektronikmodule 4a-4c weisen jeweils eine eigene Steuereinheit 40a, 40b, 40c auf, um an der Kommunikation über die Kommunikationsverbindung 5 teilnehmen zu können. Vorzugsweise können die Steuereinheiten 40a, 40b, 40c so ausgebildet sein, dass sie selbst bestimmte Auswertungsaufgaben übernehmen können. Die Steuereinheiten 40a, 40b, 40c können zum Beispiel Mikroprozessoren oder Logikbausteine sein.

Die modulare Sicherheitssteuerung 1 dient insbesondere dem Zweck, zumindest eine daran angeschlossene Maschine beim Auftreten einer Gefahrensituation fehlerfrei und sicher in einen für Menschen ungefährlichen Zustand zu überführen. Hierfür werden eingangsseitig mittels einer Anzahl von Sicherheitseingängen 41a, 42a, 41b, 42b, 41c, 42c entsprechende Eingangssignale von Signalgebern beziehungsweise Meldegeräten, bei denen es sich zum Beispiel um Not-Aus-Schalter, Not-Halt-Schalter, Lichtgitter, Lichtvorhänge, Trittmatten, Schutztürpositionsschalter, 3D-Laserscanner etc. handeln kann, empfangen und sicher ausgewertet. Ausgangsseitig werden entsprechende Sicherheitsausgänge 44a, 45a, 44b, 45b, 44c, 45c eines Ausgangskreises angesteuert. Über diese Sicherheitsausgänge 44a, 45a, 44b, 45b, 44c, 45c werden beim Auftreten einer Gefahrensituation entsprechende Aktoren, wie zum Beispiel Schütze, Ventile etc., mit Ausgangssignalen derart angesteuert, dass die zumindest eine an diese Aktoren angeschlossene Maschine in einen für Menschen ungefährlichen Zustand überführt werden kann.

Die modulare Sicherheitssteuerung 1 ist so ausgebildet, dass sie den Normen EN IEC 61508, EN IEC 62061 und ISO 13849 entspricht. Dazu gehört insbesondere, dass die Steuereinheit 30 des zentralen Steuerungsmoduls 3, die Sicherheitseingänge 41a, 42a, 41b, 42b, 41c, 42c und die Sicherheitsausgänge 44a, 45a, 44b, 45b, 44c, 45c fehlersicher ausgebildet sind.

Zur Vereinfachung der weiteren Beschreibung soll nachfolgend angenommen werden, dass alle drei in Fig. 1 zeichnerisch dargestellten Elektronikmodule 4a, 4b und 4c der modularen Sicherheitssteuerung 1 jeweils zwei Sicherheitseingänge 41a, 42a, 41b, 42b, 41c, 42c sowie zwei Sicherheitsausgänge 44a, 45a, 44b, 45b, 44c, 45c aufweisen.

Die anwendungsspezifische Konfiguration der hier gezeigten modularen Sicherheitssteuerung 1 kann zum Beispiel mittels eines softwarebasierten Konfigurationswerkzeugs erstellt werden. Eine grafische Benutzerschnittstelle des Konfigurationswerkzeugs ermöglicht eine einfache und intuitive Bedienung des Konfigurationswerkzeugs. Der Benutzer kann interaktive Benutzereingaben vornehmen und zum Beispiel entsprechende Logikanforderungen, die an die modulare Sicherheitssteuerung 1 gestellt werden, festlegen. Bei dem Konfigurationsprozess können zum Beispiel auch bestimmte, in der zu steuernden Anlage beziehungsweise im Bereich der Maschine vorhandene Signalgeber, insbesondere Meldegeräte, wie zum Beispiel Not-Aus- oder Not-Halt-Taster, Schutztüren, Lichtgitter usw., oder Sensoren, deren Eingangssignale sicher ausgewertet werden müssen, sowie Aktoren, die durch die Ausgangssignale sicher angesteuert werden müssen, von dem Benutzer ausgewählt werden. Somit können also die Sicherheitseingänge 41a, 42a, 41b, 42b, 41c, 42c und die Sicherheitsausgänge 44a, 45a, 44b, 45b, 44c, 45c der modularen Sicherheitssteuerung 1 mithilfe des Konfigurationswerkzeugs konfiguriert werden. Die Funktionseigenschaften der Elektronikmodule 4a-4c und gegebenenfalls auch des zentralen Steuerungsmoduls 3 können durch Hardwareeinstellungen der mechanisch betätigbaren Regelelemente 400a, 401a, 400b, 401b, 400c, 401c und/oder der mechanisch betätigbaren Schaltelemente festgelegt werden.

Die zur Parametrisierung vornehmbaren Hardwareeinstellungen umfassen somit insbesondere das Setzen von Drehstellungen der mechanisch betätigbaren Regelelemente 400a, 401a, 400b, 401b, 400c, 401c der Elektronikmodule 4a-4c und des zentralen Steuerungsmoduls 3. Durch die Drehstellungen der Regelelemente 400a, 401a, 400b, 401b, 400c, 401c (Drehgeber, insbesondere Potentiometer) können zum Beispiel Startbedingungen, Schaltzeiten, Einschalt- und/oder Ausschaltverzögerungen der an die betreffenden Elektronikmodule 4a-4c angeschlossenen Aktoren sowie Sensorarten und deren Eigenschaften als Funktionsparameter eingestellt und somit parametrisiert werden. Ferner können die Hardwareeinstellungen auch das Setzen von Schaltstellungen eines oder mehrerer Schaltelemente der Elektronikmodule 4a-4c und gegebenenfalls auch des zentralen Steuerungsmoduls 3 umfassen, wobei diese Schaltelemente nicht als Drehgeber ausgebildet sind. Nicht als abschließend zu verstehende Beispiele für derartige Schaltelemente, die für die Parametrisierung der Elektronikmodule 4a-4c sowie gegebenenfalls auch des zentralen Steuerungsmoduls 3 eingesetzt werden können, sind DIP-Schalter. Ein Nutzer kann die Stellungen der mechanisch betätigbaren Regelelemente 400a, 401a, 400b, 401b, 400c, 401c und Schaltelemente bei der Konfiguration vorgeben, so dass die entsprechenden Einstellungen bei der Herstellung der modularen Sicherheitssteuerung 1 bereits herstellerseitig vorgenommen werden können. Dadurch entfällt ein zusätzlicher Einstellungsaufwand bei der Inbetriebnahme der modularen Sicherheitssteuerung 1.

Bei der softwarebasierten Konfiguration der modularen Sicherheitssteuerung 1 wird ein eineindeutiger Konfigurationscode erzeugt und als Datensatz in geeigneter Weise in einer nicht-flüchtigen Speichereinrichtung abrufbar gespeichert, wobei dieser Konfigurationscode die Konfiguration des Modulblocks 2 und alle vorgenommenen Parametrisierungen repräsentiert. Vorzugsweise wird dem eineindeutigen Konfigurationscode auch eine Seriennummer der modularen Sicherheitssteuerung 1 zugeordnet. Wenn dieser eineindeutige Konfigurationscode zu einem späteren Zeitpunkt ausgelesen und decodiert wird, können die Konfiguration und alle vorgenommenen Parametrisierungen der modularen Sicherheitssteuerung 1 wiederhergestellt und über die Seriennummer der betreffenden modularen Sicherheitssteuerung 1 zugeordnet werden.

Ein System 100, mittels dessen ein Verfahren zur Erkennung der Konfiguration der modularen Sicherheitssteuerung 1 durchgeführt werden kann, umfasst eine Auswerteeinrichtung 101, eine kamerabasierte Abbilderzeugungseinrichtung 102 sowie eine Anzeigevorrichtung 103.

Die kamerabasierte Abbilderzeugungseinrichtung 102 ist dazu ausgebildet, ein digitales Abbild 200 des Modulblocks 2 der modularen Sicherheitsschaltung 1 zu erzeugen. Die Abbilderzeugungseinrichtung 102, mittels derer dieses Abbild 200 erzeugt wird, umfasst eine Kameraeinrichtung 107, die eines oder mehrere Bilder oder Bildsequenzen, insbesondere Videosequenzen, des Modulblocks 2 generieren kann. Die Abbilderzeugungseinrichtung 102 kann zum Beispiel ein Mobiltelefon oder ein Tablet-PC oder eine Smart-Kamera für die industrielle Bildverarbeitung oder eine VR-Brille sein. Grundsätzlich kann das Abbild 200 des Modulblocks 2 auch durch die Verarbeitung akustischer Signale generiert werden, die mittels der Abbilderzeugungseinrichtung 102 erfasst werden.

Die Anzeigevorrichtung 103 ist vorzugsweise (aber nicht zwingend) in die Abbilderzeugungseinrichtung 102 integriert.

Eine Abbilderfassungssoftware der Abbilderzeugungseinrichtung 102, die für die Generierung des Abbildes 200 des Modulblocks 2 verwendet wird, ist so ausgebildet, dass sie anhand eines oder mehrerer Bilder oder Bildsequenzen, insbesondere Videosequenzen, die von der Kameraeinrichtung 107 generiert (aufgezeichnet) werden, den Modulblock 2 geometrisch erfassen kann und vorzugsweise durch eine kaskadierte, insbesondere modulweise, Erfassung sämtliche Konfigurationsmerkmale des Modulblocks 2 und alle vorgenommenen Parametrisierungen erkennen kann.

Die Sicherstellung der Konfigurations- und Parametrisierungserkennung des Modulblocks 2 hängt im Wesentlichen von einem Satz gegenseitig nicht voneinander abhängender, spezifischer Erkennungsmerkmale, welche insbesondere die logischen Abhängigkeiten abbilden, ab. Diese spezifischen Erkennungsmerkmale sind beispielsweise die geometrische Struktur der modularen Sicherheitssteuerung 1, die durch die Anordnung des zentralen Steuerungsmoduls 3 und der übrigen Elektronikmodule 4a-4c innerhalb des Modulblocks 2 gegeben ist, sowie zusätzliche visuell erfassbare, beschreibende Darstellungen, wie zum Beispiel spezielle Farbgebungen, Codierungen, Muster, optische Signalcodes, wie zum Beispiel blinkende beziehungsweise blitzende LEDs, die unterschiedliche Taktungen und/oder Blinkmuster und/oder Farbumschläge aufweisen können, sowie die Stellungen der Regelelemente 400a, 401a, 400b, 401b, 400c, 401c und der Schaltelemente, welche die jeweiligen Parametrisierungen repräsentieren.

Die Abbilderfassungssoftware der Abbilderzeugungseinrichtung 102 stellt die notwendigen Aufzeichnungsverfahren für die Erstellung des digitalen Abbildes 200 auf Basis eines oder mehrerer Bilder beziehungsweise Bildsequenzen der Kameraeinrichtung 107 und für die zuverlässige Erfassung der spezifischen Erkennungsmerkmale des Modulblocks 2 zur Verfügung und kann dadurch das digitale Abbild 200 erstellen. Anschließend wird das digitale Abbild 200 von der Abbilderzeugungseinrichtung 102 über eine Kommunikationsverbindung 104, die vorzugsweise drahtlos ausgeführt ist, zur Auswerteeinrichtung 101 übertragen.

Die Auswerteeinrichtung 101 weist ein Prozessormittel 109, ein nicht-flüchtiges Speichermittel 105 und ein flüchtiges Speichermittel 106 auf. Innerhalb des nicht-flüchtigen Speichermittels 105 ist ein Auswertealgorithmus gespeichert, der bei der Durchführung des Verfahrens in das flüchtige Speichermittel 106 geladen und von dem Prozessormittel 109 ausgeführt wird.

Nachfolgend sollen weitere Einzelheiten des Verfahrens zur Erkennung der Konfiguration der modularen Sicherheitssteuerung 1 näher erläutert werden.

Bei der Durchführung des Verfahrens wird zunächst eine Vielzahl eineindeutiger Konfigurationscodes unterschiedlicher modularer Sicherheitssteuerungen 1 bereitgestellt, wobei die Konfigurationscodes unterschiedliche Konfigurationen und Parametrisierungen einer Vielzahl unterschiedlicher Sicherheitssteuerungen 1 repräsentieren. Diese eineindeutigen Konfigurationscodes werden als Datensätze in einer nicht-flüchtigen Speichereinrichtung abrufbar gespeichert, auf die von der Auswerteeinrichtung 101 zugegriffen werden kann. Bei dieser nicht-flüchtigen Speichereinrichtung kann es sich zum Beispiel um das nicht-flüchtige Speichermittel 105 der Auswerteeinrichtung 101 selbst handeln, so dass die Speicherung der Konfigurationscodes zentral erfolgt. Alternativ oder zusätzlich besteht auch die Möglichkeit, dass die Speicherung der Konfigurationscodes dezentral, insbesondere in einem Cloudspeicher 108 oder in einer Servereinrichtung, erfolgt.

In einem nächsten Schritt wird das digitale Abbild 200 des Modulblocks 2 der modularen Sicherheitssteuerung 1 mittels der Abbilderzeugungseinrichtung 102 auf Basis eines oder mehrerer Bilder beziehungsweise Bildsequenzen der Kameraeinrichtung 107 erzeugt. Mithilfe der Abbilderfassungssoftware der Abbilderzeugungseinrichtung 102 erfolgt hierbei vorzugsweise zunächst eine Erfassung einer Analyseachse, anhand derer sich festlegen lässt, ob die einzelnen Module des Modulblocks 2 in horizontaler Richtung nebeneinander oder alternativ in vertikaler Richtung übereinander angeordnet sind. Vorzugsweise wird hierfür die Lage des eineindeutig erkennbaren zentralen Steuerungsmoduls 3 erfasst. Somit kann die Einbaurichtung aller Module der modularen Sicherheitssteuerung 1 bestimmt werden.

Anschließend wird von der Abbilderfassungssoftware der Abbilderzeugungseinrichtung 102 die Anzahl der Module innerhalb des Modulblocks 2 identifiziert. Dieses kann zum Beispiel dadurch erfolgen, dass definierte Abstände (Lücken) zwischen den einzelnen Modulen des Modulblocks 2 erfasst werden.

Nachfolgend werden dann die spezifischen Erkennungsmerkmale der Module 3, 4a-4c innerhalb des Modulblocks 2 und sämtliche Parametrisierungen der Module 3, 4a-4c innerhalb des Modulblocks 2 erfasst, so dass anschließend das digitale Abbild 200 des Modulblocks 2 erstellt werden kann. Die Erfassung der Erkennungsmerkmale und Parametrisierungen kann in einem einzigen Schritt für den gesamten Modulblock 2 erfolgen. In vorteilhafter Weise ist aber auch eine modulweise und somit kaskadierte Erfassung der Erkennungsmerkmale und Parametrisierungen der Module 3, 4a-4c innerhalb des Modulblocks 2 möglich.

Es besteht die Möglichkeit, dass einzelne Bereiche des Modulblocks 2 auf Basis des generierten Abbildes 200 nicht eineindeutig identifizierbar beziehungsweise zuordenbar sind. Um diesem Problem abzuhelfen und eine Korrektur zu ermöglichen, wird dem Nutzer das Abbild 200 mittels der Anzeigevorrichtung 103 angezeigt. Dabei werden in dem Abbild 200 diejenigen Bereiche visualisiert beziehungsweise markiert, welche nicht eineindeutig ausgewertet werden können. Der Nutzer kann dann von diesen Bereichen mittels der Kameraeinrichtung 107 der Abbilderzeugungseinrichtung 102 ein zusätzliches Detailbild generieren, welches dann in die weitere Auswertung einfließt.

Das mittels der Abbilderzeugungseinrichtung 102 erstellte digitale Abbild 200 des Modulblocks 2 der modularen Sicherheitssteuerung 1, welches neben reinen Bildinformationen vorzugsweise auch zusätzliche Meta-Daten, die bei der Erstellung des digitalen Abbildes 200 erhalten wurden, umfassen kann, wird nachfolgend über die Kommunikationsverbindung 104 zu der Auswerteeinrichtung 101 übertragen und in dem flüchtigen Speichermittel 106 gespeichert.

Mittels der Auswerteeinrichtung 101 wird ein Auswertealgorithmus ausgeführt, welcher durch Bilderkennung die Positionen des zentralen Steuerungsmoduls 3 und der Elektronikmodule 4a-4c innerhalb des Modulblocks 2, die verwendeten Modultypen und alle Parametereinstellungen jedes der Elektronikmodule 4a-4c und des zentralen Steuerungsmoduls 3 im digitalen Abbild 200 erfasst und auswertet und aus den dabei generierten Informationen einen eineindeutigen Logikcode erzeugt, welcher die aktuelle Konfiguration und Parametrisierung des gesamten Modulblocks 2 der modularen Sicherheitssteuerung 1 repräsentiert.

Die Bilderkennung kann durch einen Bildvergleich mit einer Vielzahl von Bildern, die zum Beispiel in einer Datenbank innerhalb des nicht-flüchtigen Speichermittels 105 der Auswerteeinrichtung 101 oder im Cloudspeicher 108 abrufbar gespeichert sind, erfolgen. Da ein Bildvergleich des gesamten Abbildes 200 des Modulblocks 2 aufgrund der Vielzahl möglicher Konfigurationen und Parametrisierungen relativ aufwändig wäre, ist es vorteilhaft, den Bildvergleich modulweise und damit kaskadiert auszuführen. Um das digitale Abbild 200 des Modulblocks 2 auszuwerten, wird dann ausgehend vom zentralen Steuerungsmodul 3 modulweise auf Basis der Anordnung der Erkennungsmerkmale des zentralen Steuerungsmoduls 3 und der Elektronikmodule 4a-4c die Konfiguration des Modulblocks 2 beziehungsweise die Verdrahtungslogik durch den Bildvergleich analysiert. Nachfolgend werden dann auch die jeweiligen Parametrisierungen des zentralen Steuerungsmoduls 3 und der Elektronikmodule 4a-4c auf Basis der Stellungen der Regelelemente 400a, 401a, 400b, 401b, 400c, 401c und der gegebenenfalls vorhandenen Schaltelemente, die sich aus dem Abbild 200 ergeben, ebenfalls mittels eines Bildvergleichs identifiziert. Die Parametrisierungen des zentralen Steuerungsmoduls 3 und der Elektronikmodule 4a-4c werden vorzugsweise ebenfalls modulweise erfasst.

Die Bilderkennung kann alternativ zu einem Bildvergleich auch durch eine Simulation und/oder durch Berechnungen auf Basis von Bildsegmenten des digitalen Abbildes 200 erfolgen.

Es besteht alternativ auch die Möglichkeit, dass die vorstehend beschriebenen Bilderkennungen bereits mittels der Abbilderzeugungseinrichtung 102 ausgeführt werden, sofern die Rechenleistung der Abbilderzeugungseinrichtung 102 hierfür ausreichend sein sollte.

Wie bereits erwähnt, werden nach der Analyse des digitalen Abbildes 200 des Modulblocks 2 die sich daraus ergebenden Informationen in den eineindeutigen Logikcode transformiert, der die aktuelle Konfiguration sowie die aktuelle Parametrisierung des Modulblocks 2 der modularen Sicherheitssteuerung 1 repräsentiert und in dem nicht-flüchtigen Speichermittel 105 der Auswerteeinrichtung gespeichert.

In einem weiteren Verfahrensschritt wird dann der Logikcode mit den bereitgestellten Konfigurationscodes zur Identifikation der aktuellen Konfiguration und Parametrisierung des Modulblocks 2 der modularen Sicherheitssteuerung 1 abgeglichen, wobei durch diesen Abgleich ein Identifikationsdatensatz erzeugt wird, wenn der Logikcode mit einem der gespeicherten Konfigurationscodes übereinstimmt, und wobei ein Fehlercode erzeugt wird, wenn der Logikcode mit keinem der gespeicherten Konfigurationscodes übereinstimmt.

Anschließend werden dann der Identifikationsdatensatz und/oder ein aus dem Identifikationsdatensatz generiertes Bild mittels der Anzeigevorrichtung 103 angezeigt, sofern der Logikcode mit einem der gespeicherten Konfigurationscodes übereinstimmt. Wenn der Logikcode mit keinem der Konfigurationscodes übereinstimmt, wird der Fehlercode mittels der Anzeigevorrichtung 103 angezeigt. Vorzugsweise kann hierbei aus dem Identifikationsdatensatz ein Vergleich des zu erwartenden Bildes des Modulblocks 2 mit dem tatsächlichen digitalen Abbild 200 visualisiert werden. Alternativ oder zusätzlich kann auch der zeitliche Veränderungsverlauf der Konfiguration und der Parametrisierung des Modulblocks 2 der modularen Sicherheitsschaltung 1 bestimmt und mittels der Anzeigevorrichtung 103 visualisiert werden.

Der Logikcode kann vorzugsweise zusammen mit dem digitalen Abbild 200 und der zugehörigen Seriennummer der modularen Sicherheitssteuerung 1 zu Dokumentationszwecken in den dem nicht-flüchtigen Speichermittel 105 der Auswerteeinrichtung 101 und/oder im Cloudspeicher 108 und/oder in einer Servereinrichtung abrufbar gespeichert werden.

Die hier vorgestellte Konfigurationserkennung gewährleistet in vorteilhafter Weise, dass die real existente Konfiguration und Parametrisierung des Modulblocks 2 der modularen Sicherheitsschaltung 1 zu jedem Zeitpunkt in einem "digitalen Zwilling" in Form des digitalen Abbildes 200 und dem daraus erzeugten Logikcode, welcher die aktuelle Konfiguration und Parametrisierung des Modulblocks 2 der modularen Sicherheitssteuerung 1 repräsentiert, kongruent abgebildet ist.

Durch das hier vorgestellte Verfahren ergeben sich zahlreiche Vorteile zum Beispiel bei einem Austausch von Modulen, bei einer Modifizierung der ursprünglichen Konfiguration, bei der Durchführung turnusgemäßer Überprüfungen sowie bei der Diagnose von Fehlern und Defekten.

Austausch von Modulen
- Prüfung, ob der "digitale Zwilling" in Form des digitalen Abbildes 200 mit der Realität übereinstimmt,
- Sicherstellung, dass Parametrisierungen, welche im operativen Betrieb vorgenommen wurden, auch bei einem Austauschmodul berücksichtigt werden.

Modifizierung der ursprünglich erstellten Konfiguration
- Prüfung, ob ein Nutzer dazu berechtigt ist, bestimmte Rekonfigurationen durchzuführen,
- Dokumentation von Rekonfigurationen (insbesondere Art, Nutzer, Zeit, Begründung),
- Aktualisierung des "digitalen Zwillings" in Form des digitalen Abbildes 200,
- gegebenenfalls Plausibilisierung gegenüber einem übergeordneten/komplementären Sicherheitssystem/Sicherheitsdesign,
- "Lernen" aus Rekonfigurationen/dem Austausch von Modulen im Feld für die Engineering-Phase beziehungsweise als Handlungsanweisung für ähnliche Sicherheitssteuerungen im Feld.

Durchführung turnusgemäßer Überprüfungen
- Überprüfung, ob der aktuelle Aufbau/die Realität dem auf der modularen Sicherheitssteuerung 1 aufgedruckten Typenschlüssel entspricht.

Diagnose von Fehlern und Defekten
- Identifizierung von Abweichungen zwischen erkannten Einstellungen der Regelelemente 400a, 401a, 400b, 401b, 400c, 401c und/oder der Schaltelemente und der zugehörigen Steuerungsfunktion (z.B. ein Drehgeber ist nicht eingerastet oder defekt),
- Identifizierung von kritischen Einstellungen der Regelelemente 400a, 401a, 400b, 401b, 400c, 401c und/oder der Schaltelemente (z.B. ein Drehgeber wird auf einen Wert eingestellt, der hinsichtlich der Sicherheit oder für zugehörige/komplementäre Objekte kritisch ist).

## Patentansprüche

1. Verfahren zur Erkennung einer Konfiguration einer modularen Sicherheitssteuerung (1), die einen Modulblock (2) mit einem zentralen, parametrisierbaren Steuerungsmodul (3) und mit einer Anzahl n ≥ 1 parametrisierbarer Elektronikmodule (4a-4c) aufweist, die aus einer Mehrzahl zur Verfügung stehender Modultypen ausgewählt sind, wobei die Konfiguration der modularen Sicherheitssteuerung (1) durch unterschiedliche Elektronikmodultypen und unterschiedliche Positionen der Elektronikmodule (4a-4c) innerhalb des Modulblocks (2) festlegbar ist und wobei die Funktionen der modularen Sicherheitssteuerung (1) durch die Einstellung von Regelelementen (400a, 401a, 400b, 401b, 400c, 401c) und/oder Schaltelementen zumindest einiger der Elektronikmodule (4a-4c) und des zentralen Steuerungsmoduls (3) parametrisierbar sind,
umfassend die Schritte:
- Bereitstellen einer Vielzahl eineindeutiger Konfigurationscodes, die unterschiedliche Konfigurationen und Parametrisierungen einer Vielzahl unterschiedlicher modularer Sicherheitssteuerungen (1) repräsentieren,
- Erzeugen eines digitalen Abbildes (200) des Modulblocks (2) der modularen Sicherheitssteuerung (1) mittels einer kamerabasierten Abbilderzeugungseinrichtung (102) auf Basis eines oder mehrerer Bilder oder Bildsequenzen des Modulblocks (2), die von einer Kameraeinrichtung (107) der Abbilderzeugungseinrichtung (102) generiert werden,
- Übertragen des digitalen Abbildes (200) zu einer Auswerteeinrichtung (101), wobei mittels der Auswerteeinrichtung (101) ein Auswertealgorithmus ausgeführt wird, welcher durch Bilderkennung die ausgewählten Modultypen, die Positionen des zentralen Steuerungsmoduls (3) und der Elektronikmodule (4a-4c) innerhalb des Modulblocks (2) und die Einstellungen der Regelelemente (400a, 401a, 400b, 401b, 400c, 401c) und/oder Schaltelemente jedes der Elektronikmodule (4a-4c) und des zentralen Steuerungsmoduls (3) erfasst und verarbeitet und aus den daraus erhaltenen Informationen einen eineindeutigen Logikcode erzeugt, welcher die aktuelle Konfiguration und Parametrisierung des Modulblocks (2) der modularen Sicherheitssteuerung (1) repräsentiert,
- Vergleichen des im vorhergehenden Schritt erzeugten eineindeutigen Logikcodes mit den bereitgestellten eineindeutigen Konfigurationscodes zur Identifikation der aktuellen Konfiguration und Parametrisierung des Modulblocks (2) der modularen Sicherheitssteuerung (1), wobei ein Identifikationsdatensatz erzeugt wird, wenn der Logikcode mit einem der Konfigurationscodes übereinstimmt, und wobei ein Fehlercode erzeugt wird, wenn der Logikcode mit keinem der Konfigurationscodes übereinstimmt, und
- Ausgeben des Identifikationsdatensatzes und/oder eines aus dem Identifikationsdatensatz erhältlichen Bildes, wenn der Logikcode mit einem der Konfigurationscodes übereinstimmt, oder des Fehlercodes, wenn der Logikcode mit keinem der Konfigurationscodes übereinstimmt,
wobei während des Schritts des Erzeugens des digitalen Abbildes (200) eine Mehrzahl spezifischer Erkennungsmerkmale der Module (3, 4a-4c) innerhalb des Modulblocks (2) und alle Parametrisierungen der Module (3, 4a-4c) erfasst werden.

2. Verfahren nach Anspruch 1, **dadurch gekennzeichnet, dass** während des Schritts des Erzeugens des digitalen Abbildes (200) eine Analyseachse erfasst wird, anhand derer festlegbar ist, ob die einzelnen Module (3, 4a-4c) des Modulblocks (2) in horizontaler Richtung nebeneinander oder in vertikaler Richtung übereinander angeordnet sind.

3. Verfahren nach Anspruch 2, **dadurch gekennzeichnet, dass** die Erfassung der Analyseachse durch die Bestimmung der Einbaulage des zentralen Steuerungsmoduls (3) innerhalb des Modulblocks (2) erfolgt.

4. Verfahren nach einem der Ansprüche 1 bis 3, **dadurch gekennzeichnet, dass** während des Schritts des Erzeugens des digitalen Abbildes (200) die Anzahl der Module (3, 4a-4c) innerhalb des Modulblocks (2) bestimmt wird.

5. Verfahren nach Anspruch 4, **dadurch gekennzeichnet, dass** zur Bestimmung der Anzahl der Module (3, 4a-4c) des Modulblocks (2) definierte Abstände zwischen den einzelnen Modulen (3, 4a-4c) des Modulblocks (2) erfasst werden.

6. Verfahren nach einem der Ansprüche 1 bis 5, **dadurch gekennzeichnet, dass** die Erfassung der spezifischen Erkennungsmerkmale und Parametrisierungen der Module (3, 4a-4c) innerhalb des Modulblocks (2) in einem einzigen Schritt für den gesamten Modulblock (2) durchgeführt wird.

7. Verfahren nach einem der Ansprüche 1 bis 5, **dadurch gekennzeichnet, dass** die Erfassung der spezifischen Erkennungsmerkmale und Parametrisierungen der Module (3, 4a-4c) innerhalb des Modulblocks (2) modulweise in mehreren Schritten durchgeführt wird.

8. Verfahren nach einem der Ansprüche 1 bis 7, **dadurch gekennzeichnet, dass** die Bilderkennung mittels eines Bildvergleichs des digitalen Abbildes (200) mit einer Vielzahl von Bildern, die insbesondere in einer Datenbank abrufbar gespeichert sind, durchgeführt wird.

9. Verfahren nach Anspruch 8, **dadurch gekennzeichnet, dass** der Bildvergleich modulweise durchgeführt wird.

10. Verfahren nach einem der Ansprüche 1 bis 7, **dadurch gekennzeichnet, dass** die Bilderkennung durch Simulation und/oder durch Berechnungen auf Basis von Bildsegmenten des digitalen Abbildes (200) erfolgt.

11. Verfahren nach einem der Ansprüche 1 bis 10, **dadurch gekennzeichnet, dass** der Identifikationsdatensatz und/oder das aus dem Identifikationsdatensatz erhältliche Bild, wenn der Logikcode mit einem der Konfigurationscodes übereinstimmt, oder der Fehlercode, wenn der Logikcode mit keinem der Konfigurationscodes übereinstimmt, mittels einer Anzeigevorrichtung (103) visualisiert werden.

12. System (100) zur Erkennung einer Konfiguration einer modularen Sicherheitssteuerung (1), umfassend eine Auswerteeinrichtung (101), eine kamerabasierte Abbilderzeugungseinrichtung (102) sowie eine Anzeigevorrichtung (103), wobei das System dazu ausgebildet ist, ein Verfahren nach einem der Ansprüche 1 bis 11 auszuführen.

## Claims

1. Method for identifying a configuration of a modular safety controller (1) comprising a module block (2) having a central parameterizable control module (3) and having a number n ≥ 1 of parameterizable electronics modules (4a-4c) that are selected from a plurality of available module types, wherein the configuration of the modular safety controller (1) can be determined by different types of electronics modules and different positions of the electronics modules (4a-4c) within the module block (2) and wherein the functions of the modular safety controller (1) can be parameterized by setting control elements (400a, 401a, 400b, 401b, 400c, 401c) and/or switching elements of at least some of the electronics modules (4a-4c) and of the central control module (3),
said method comprising the following steps:
- providing a plurality of unambiguous configuration codes representing different configurations and parameterizations of a plurality of different modular safety controllers (1),
- generating a digital image (200) of the module block (2) of the modular safety controller (1) by means of a camera-based image generating device (102) based on one or more images or image sequences of the module block (2) generated by a camera device (107) of the image generating device (102);
- transmitting the digital image (200) to an evaluation device (101), wherein the evaluation device (101) is used to execute an evaluation algorithm that captures, through image recognition, and processes the selected module types, the positions of the central control module (3) and the electronics modules (4a-4c) within the module block (2), and the settings of the control elements (400a, 401a, 400b, 401b, 400c, 401c) and/or switching elements of each of the electronics modules (4a-4c) and of the central control module (3) and generates an unambiguous logic code from the information obtained therefrom, the unambiguous logic code representing the current configuration and parameterization of the module block (2) of the modular safety controller (1),
- comparing the unambiguous logic code generated in the preceding step with the provided unambiguous configuration codes to identify the current configuration and parameterization of the module block (2) of the modular safety controller (1), wherein an identification dataset is generated if the logic code matches one of the configuration codes, and wherein an error code is generated if the logic code does not match any of the configuration codes, and
- outputting the identification dataset and/or an image obtainable from the identification dataset if the logic code matches one of the configuration codes, or outputting the error code if the logic code does not match any of the configuration codes,
wherein, during the step of generating the digital image (200), a plurality of specific recognition features of the modules (3, 4a-4c) within the module block (2) and all parametrizations of the modules (3, 4a-4c) are detected.

2. Method according to Claim 1, **characterized in that**, during the step of generating the digital image (200), an analysis axis is captured, on the basis of which it is possible to determine whether the individual modules (3, 4a-4c) of the module block (2) are arranged next to one another in the horizontal direction or on top of one another in the vertical direction.

3. Method according to claim 2, **characterized in that** the analysis axis is captured by determining the installation position of the central control module (3) within the module block (2).

4. Method according to any one of Claims 1 to 3, **characterized in that** the number of modules (3, 4a-4c) within the module block (2) is determined during the step of generating the digital image (200).

5. Method according to Claim 4, **characterized in that** defined distances between the individual modules (3, 4a-4c) of the module block (2) are detected for determining the number of modules (3, 4a-4c) of the module block (2).

6. Method according to any one of Claims 1 to 5, **characterized in that** the specific recognition features and parameterizations of the modules (3, 4a-4c) within the module block (2) are captured in a single step for the entire module block (2).

7. Method according to any one of Claims 1 to 5, **characterized in that** the specific recognition features and parameterizations of the modules (3, 4a-4c) within the module block (2) are captured module by module in multiple steps.

8. Method according to any one of Claims 1 to 7, **characterized in that** the image recognition is carried out by means of an image comparison of the digital image (200) with a plurality of images that are stored in particular in a database so as to be retrievable.

9. Method according to Claim 8, **characterized in that** the image comparison is carried out module by module.

10. Method according to any one of Claims 1 to 7, **characterized in that** the image recognition is carried out by simulation and/or by calculations based on image segments of the digital image (200).

11. Method according to any one of Claims 1 to 10, **characterized in that**, if the logic code matches one of the configuration codes, the identification dataset and/or the image obtainable from the identification dataset or, if the logic code does not match any of the configuration codes, the error code is visualized by means of a display device (103).

12. System (100) for identifying a configuration of a modular safety controller (1), comprising an evaluation device (101), a camera-based image generating device (102) and a display device (103), wherein the system is designed to carry out a method according to any one of Claims 1 to 11.

## Revendications

1. Procédé de reconnaissance d'une configuration d'une commande de sécurité (1) modulaire, qui comporte un bloc de modules (2) avec un module de commande (3) central paramétrable et avec un nombre n ≥ 1 de modules électroniques (4a - 4c) paramétrables, qui sont choisis parmi une multitude de types de modules disponibles, la configuration de la commande de sécurité (1) modulaire pouvant être fixée par différents types de modules électroniques et différentes positions des modules électroniques (4a - 4c) à l'intérieur du bloc de modules (2) et les fonctions de la commande de sécurité (1) modulaire pouvant être paramétrées par le réglage d'éléments de régulation (400a, 401a, 400b, 401b, 400c, 401c) et/ou d'éléments de commutation d'au moins certains des modules électroniques (4a - 4c) et du module de commande (3) central,
comprenant les étapes de :
- fourniture d'une pluralité de codes de configuration univoques, qui représentent des configurations et des paramétrages différents d'une pluralité de différentes commandes de sécurité (1) modulaires,
- génération d'une représentation numérique (200) du bloc de modules (2) de la commande de sécurité (1) modulaire au moyen d'un équipement de génération de représentations (102) basé sur une caméra sur la base d'une ou de plusieurs images ou de séquences d'images du bloc de modules (2), qui sont générées par un équipement de caméra (107) de l'équipement de génération de représentations (102),
- transmission de la représentation numérique (200) à un équipement d'évaluation (101), l'équipement d'évaluation (101) permettant d'exécuter un algorithme d'évaluation, qui détecte et traite par reconnaissance d'images les types de modules choisis, les positions du module de commande (3) central et des modules électroniques (4a - 4c) à l'intérieur du bloc de modules (2) et les réglages des éléments de régulation (400a, 401a, 400b, 401b, 400c, 401c) et/ou des éléments de commutation de chacun des modules électroniques (4a - 4c) et du module de commande (3) central et génère à partir des informations obtenues sur cette base un code logique univoque, qui représente la configuration et le paramétrage actuels du bloc de modules (2) de la commande de sécurité (1) modulaire,
- comparaison du code logique univoque généré dans l'étape précédente à des codes de configuration univoques fournis pour identifier la configuration et le paramétrage actuels du bloc de modules (2) de la commande de sécurité (1) modulaire, un ensemble de données d'identification étant généré lorsque le code logique concorde avec un des codes de configuration, et un code d'erreur étant généré lorsque le code logique ne concorde avec aucun des codes de configuration, et
- émission de l'ensemble de données d'identification et/ou d'une image pouvant être obtenue à partir de l'ensemble de données d'identification lorsque le code logique concorde avec un des codes de configuration, ou du code d'erreur lorsque le code logique ne concorde avec aucun des codes de configuration,
une multitude de caractéristiques de reconnaissance spécifiques des modules (3, 4a - 4c) à l'intérieur du bloc de modules (2) et la totalité des paramétrages des modules (3, 4a - 4c) étant détectés pendant l'étape de la génération de la représentation numérique (200).

2. Procédé selon la revendication 1, **caractérisé en ce qu'**est détecté pendant l'étape de la génération de la représentation numérique (200) un axe d'analyse, à l'aide duquel il peut être fixé si les divers modules (3, 4a - 4c) du bloc de modules (2) sont disposés côte à côte dans la direction horizontale ou les uns au-dessus des autres dans la direction verticale.

3. Procédé selon la revendication 2, **caractérisé en ce que** la détection de l'axe d'analyse est effectuée par la détermination de la position de montage du module de commande (3) central à l'intérieur du bloc de modules (2).

4. Procédé selon l'une des revendications 1 à 3, **caractérisé en ce que** le nombre des modules (3, 4a - 4c) à l'intérieur du bloc de modules (2) est déterminé pendant l'étape de la génération de la représentation numérique (200).

5. Procédé selon la revendication 4, **caractérisé en ce que** des distances définies entre les divers modules (3, 4a - 4c) du bloc de modules (2) sont détectées pour déterminer le nombre des modules (3, 4a - 4c) du bloc de modules (2).

6. Procédé selon l'une des revendications 1 à 5, **caractérisé en ce que** la détection des caractéristiques de reconnaissance et des paramétrages spécifiques des modules (3, 4a - 4c) à l'intérieur du bloc de modules (2) est mise en œuvre dans une unique étape pour la totalité du bloc de modules (2).

7. Procédé selon l'une des revendications 1 à 5, **caractérisé en ce que** la détection des caractéristiques de reconnaissance et des paramétrages spécifiques des modules (3, 4a - 4c) à l'intérieur du bloc de modules (2) est mise en œuvre par module lors de plusieurs étapes.

8. Procédé selon l'une des revendications 1 à 7, **caractérisé en ce que** la reconnaissance d'images est mise en œuvre au moyen d'une comparaison d'images de la représentation numérique (200) à une pluralité d'images, qui sont mémorisées en particulier de manière à pouvoir être consultées dans une base de données.

9. Procédé selon la revendication 8, **caractérisé en ce que** la comparaison d'images est mise en œuvre par module.

10. Procédé selon l'une des revendications 1 à 7, **caractérisé en ce que** la reconnaissance d'images est effectuée par simulation et/ou par des calculs sur la base de segments d'image de la représentation numérique (200).

11. Procédé selon l'une des revendications 1 à 10, **caractérisé en ce que** l'ensemble de données d'identification et/ou l'image pouvant être obtenue à partir de l'ensemble de données d'identification, lorsque le code logique concorde avec un des codes de configuration, ou du code d'erreur, lorsque le code logique ne concorde avec aucun des codes de configuration, sont visualisés au moyen d'un dispositif d'affichage (103).

12. Système (100) de reconnaissance d'une configuration d'une commande de sécurité (1) modulaire, comprenant un équipement d'évaluation (101), un équipement de génération de représentations (102) basé sur une caméra ainsi qu'un dispositif d'affichage (103), le système étant réalisé pour exécuter un procédé selon une des revendications 1 à 11.
